# FASCICULE DE BREVET EUROPEEN

(11) **EP 0 931 771 B1**
(45) Date de publication et mention de la délivrance du brevet: **08.10.2003**
(21) Numéro de dépôt: 99400177.4
(22) Date de dépôt: 26.01.1999
(51) Int. Cl.: C03B 37/14, G02B 6/08, G02B 6/06

(54) **Procédé de fabrication de matrices de fibres monomodes**
Matrixenherstellungsverfahren für Monomodefasern
Methode for manufacturing of a matrix for monomode fibres

(30) Priorité: 27.01.1998 FR 9800844
(43) Date de publication de la demande: 28.07.1999
(73) Titulaire: FRANCE TELECOM, 75015 Paris (FR)
(72) Inventeur: Bonnel, Léon, 22700 St Quay-Perros (FR); Audibert, Georges, 22560 Pleumeur-Bodou (FR); Gravey, Philippe, 22300 Lannion (FR)
(74) Mandataire: Texier, Christian

(56) Documents cités:
- DE-B- 1 223 112
- GB-A- 1 333 099
- US-A- 2 992 956
- PATENT ABSTRACTS OF JAPAN vol. 096, no. 012, 26 décembre 1996 & JP 08 220382 A (NEC CORP), 30 août 1996

## Description

L'invention concerne la fabrication des matrices de fibres optiques, notamment monomodes.

La disponibilité de matrices de fibres optiques monomodes représente un enjeu important pour le développement et la vulgarisation des technologies optiques, essentiellement dans deux domaines qui sont : d'une part les systèmes de commutation et de brassage optique en espace libre à haute densité d'interconnexions, et d'autre part les liaisons de fond de panier et l'intégration de composants avec des matrices de fibres. Les matrices de fibres monomodes sont des composants clés et indispensables pour ces deux domaines d'activité et assurent les fonctions suivantes :
- port d'entrées et sorties pour les commutateurs et brasseurs optiques en espace libre ;
- réalisation de matrices de faisceaux collimatés en association avec des matrices de microlentilles ;
- réalisation de connecteurs 2D haute densité pour bus optique ; et
- couplage de matrices de VCSEL (Vertical Cavity surface Emetting Laser) avec des matrices de fibres monomodes.

L'assemblage de fibres monomodes avec les spécifications requises, c'est-à-dire une précision de positionnement de l'ordre du µm entre fibres existe sous forme de barrettes. Les fibres sont placées dans des rainures en "V" réalisées par gravure sur substrat de silicium ou par usinage sur support verre ou zirconium. Des produits commerciaux sont disponibles actuellement.

Toutefois, en ce qui concerne l'assemblage de fibres en matrices, la réalisation reste délicate et certains problèmes non résolus à ce jour. La solution qui consisterait à effectuer un empilement de barrettes est à exclure à cause de l'impossibilité de contrôler l'épaisseur de ces barrettes avec une précision de l'ordre du µm.

Deux voies sont explorées actuellement. La première réside dans le positionnement en dynamique des fibres à l'aide de micropositionneur piézo-électrique dans une matrice de trous qui peut être réalisée suivant différents procédés tels que la gravure sur substrat silicium, le perçage de précision ou l'ablation de métal par laser. Toutefois, cette technique, qui consiste à effectuer un alignement et un collage individuel et dynamique des fibres dans une matrice de trous, est délicate, longue et très coûteuse. De plus, elle ne présente pas toutes les garanties d'un bon positionnement angulaire de la fibre dans son support et d'un parallélisme parfait entre les axes des fibres. La précision du positionnement des fibres est déterminée par la régularité du pas et du diamètre des trous de la matrice ainsi que de la performance du micropositionneur. A ce sujet, on se référera notamment aux documents suivants :
(A) N. BASAVANHALLY and al, "Evaluation of Fiber Arrays for Free Space Interconnect Applications", International Topical Meeting on OPTICAL COMPUTING, Salt Lake City, UTAH, USA, 15-17 March 1995, Vol. 12, PFB2-1, pp. 124-128 ;
(B) GEOFF M. PROUDLEY, C. STACE, H. WHITE, "Fabrication of two Dimensional Fiber Optic Arrays for an Optical Crossbar Switch" OPTICAL ENGINEERING, February 1994, Vol. 33, No. 2, pp. 627-635 ;
(C) J.M. SASSIAN and al., "Fabrication of Fiber bundle Arrays for Free-Space Photonic Switching Systems", OPTICAL ENGINEERING, September 1994, Vol. 33, No. 9, pp. 2979-2985.

Dans une seconde technique, on réalise un empilement de fibres nues ou positionnées dans des microferrules dans un support en "U". Cette technique, qui consiste à réaliser un empilement de ferrules à l'intérieur desquelles se trouvent les fibres dans une structure rigide en forme de "U", est un assemblage collectif avec un bon positionnement angulaire, mais présente un défaut de perpendicularité de la matrice de ferrules, donc une erreur de position trop importante pour les fibres situées dans les coins par rapport à une grille de référence. On se référera notamment au document (D) K. KOYABU, F. OHIRA, T. YAMAMOTO, "Fabrication of Two-Dimensionnal PANDA Fiber Array Digital Free-Space Photonic Switch Module", International Topical Meeting on OTICAL COMPUTING, Sendaï, JAPAN, 21-25 April 1996, Technical Digest Vol. 1, PWC26, pp. 136-137.

un but de l'invention est de fournir un procédé de fabrication de matrices de fibres simple, rapide et peu coûteux à mettre en oeuvre, et permettant de fabriquer une matrice de fibres avec une bonne perpendicularité entre lignes et colonnes, et un bon parallélisme entre les axes des fibres.

En vue de la réalisation de ce but, on prévoit selon l'invention un procédé de fabrication de matrices de fibres optiques comprenant les étapes consistant à :
- disposer des fibres optiques dans une enceinte en forme de parallélogramme déformable, en une matrice comprenant des lignes et des colonnes formant un angle par rapport aux lignes ; et
- déformer l'enceinte pour faire varier l'angle.

Ainsi, ce procédé permet d'optimiser la perpendicularité des côtés de la matrice. Le procédé de l'invention permet la réalisation de matrices de fibres avec un écart de position de chaque coeur de fibre inférieur à +/- 2,5 µm par rapport à une grille prédéterminée en fonction du pas choisi, et un mésalignement angulaire ne dépassant pas +/ 5 milliradians. Ces tolérances permettent d'obtenir des pertes de couplage entre fibres monomodes inférieures à 3 dB. Grâce à ce procédé, la réalisation de matrices de fibres, notamment de fibres monomodes, est d'une extrême simplicité. Le réglage qui est collectif s'effectue par simple visualisation.

La validation de ce procédé de juxtaposition et d'empilement repose sur le fait que lors de l'assemblage, les fibres, et par exemple les ferrules, sont placées de façon aléatoire. Il se produit alors un équilibre dans la répartition entre les ferrules qui ont un diamètre maximum et minimum. Ainsi, chaque coeur de fibre se trouve à une position très proche de la grille définie en fonction du pas. Une simulation sur cinq mille reconfigurations d'une matrice 8x8 (soixante-quatre fibres) a permis de vérifier cette analyse. Dans le cas de l'assemblage le moins favorable, l'écart moyen par rapport à une grille de référence est seulement de 2,06 µm.

Avantageusement, le procédé comprend l'étape de fixer les fibres les unes par rapport aux autres.

Avantageusement, l'étape de fixation comprend un moulage au moyen d'une résine.

Avantageusement, le procédé comprend l'étape de presser la matrice suivant au moins une direction parmi la direction des lignes et la direction des colonnes.

Ainsi, en plus de sa perpendicularité, on règle les dimensions de la matrice.

On prévoit également selon l'invention un dispositif de fabrication de matrices de fibres optiques, présentant quatre faces délimitant une enceinte adaptée à recevoir des fibres optiques disposées en une matrice, les faces donnant à l'enceinte une forme de parallélogramme, les faces non parallèles entre elles formant un angle, dans lequel l'enceinte est déformable pour faire varier l'angle.

Ce dispositif permet de mettre en oeuvre le procédé selon l'invention.

Avantageusement, le dispositif comporte des moyens de réglage de l'angle.

Avantageusement, le procédé comporte deux éléments formant deux faces de l'enceinte parallèles entre elles, un châssis, et au moins un actionneur mobile par rapport au châssis et relié aux éléments de sorte qu'un déplacement de l'actionneur fait varier l'angle.

L'actionneur permet de modifier avec précision la perpendicularité du parallélogramme.

Avantageusement, l'actionneur est articulé au châssis.

Avantageusement, l'actionneur est articulé au moyen d'une partie flexible.

Avantageusement, le dispositif comporte deux actionneurs reliés aux deux éléments respectifs et reliés entre eux.

Avantageusement, le dispositif comporte des moyens de réglage d'une distance séparant des faces de l'enceinte parallèles entre elles.

Avantageusement, les moyens de réglage de la distance comprennent un organe de manoeuvre, un poussoir pour pousser l'une des faces sous l'effet d'une sollicitation par l'organe de manoeuvre, et une bille intercalée entre l'organe de manoeuvre et le poussoir.

Ainsi, on évite de transmettre une sollicitation en rotation sur la matrice en même temps que l'on exerce une poussée pour le réglage de la dimension.

Avantageusement, le dispositif comporte des éléments en zirconium formant les faces.

Avantageusement, les éléments comprennent des cales.

On prévoit en outre selon l'invention une matrice de fibres optiques selon la revendication 15 et une matrice selon la revendication 16.

L'invention est particulièrement avantageuse pour les matrices de fibres monomodes.

D'autres caractéristiques et avantages de l'invention apparaîtront encore dans la description suivante d'un mode préféré de réalisation donné à titre d'exemple non limitatif. Aux dessins annexés :
- la figure 1 est une vue en élévation d'un dispositif de fabrication selon un mode préféré de réalisation de l'invention ;
- la figure 2 est une vue à plus grande échelle d'un détail de la figure 1 ;
- la figure 3 est une vue en coupe transversale d'une matrice de fibres avec un important défaut de perpendicularité ; et
- la figure 4 est une vue de la matrice de la figure 3 après correction du défaut.

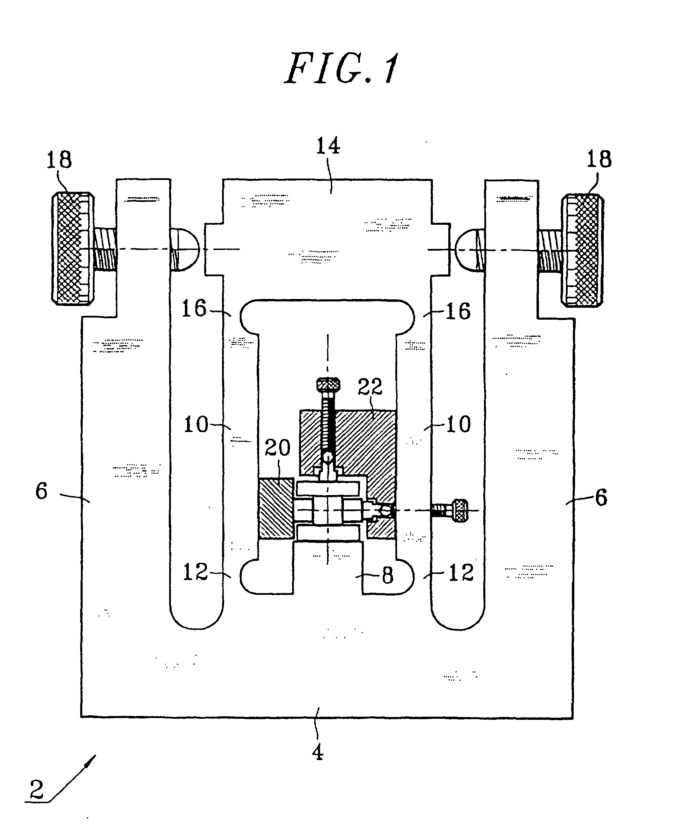

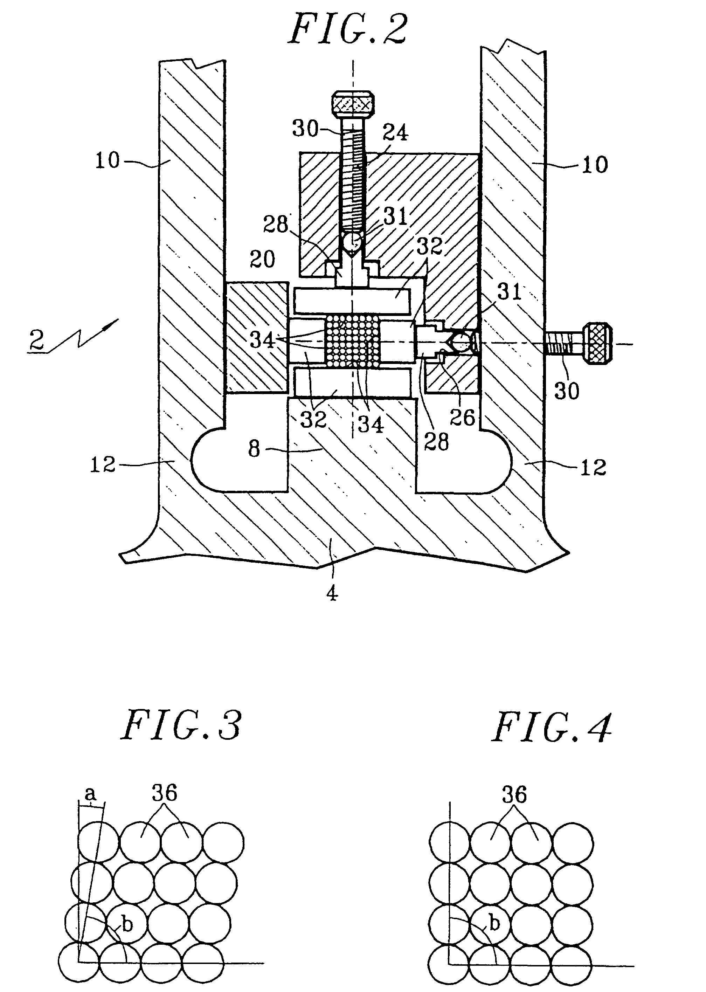

On a illustré aux figures 1 et 2 un mode de réalisation préféré du dispositif de fabrication de matrices de fibres optiques monomodes selon l'invention. Ce dispositif comporte un châssis 2 comprenant un socle 4, ici horizontal, et deux montants, ici verticaux, gauche et droit 6 s'étendant en regard l'un de l'autre perpendiculairement au socle 4. Il comporte un support 8 fixé au socle 4 à mi-distance entre les montants, entre ceux-ci.

Le dispositif comporte deux poutres rectilignes verticales 10 à section rectangulaire, identiques entre elles, s'étendant par une extrémité inférieure 12 à partir du socle 4 parallèlement aux montants 6, entre ceux-ci. Le dispositif comporte un bras supérieur 14 relié à des extrémités supérieures 16 des poutres 10. Les extrémités inférieures 12 et supérieures 16 des poutres 10 sont amincies pour constituer des articulations flexibles élastiquement. Le socle 4, le bras supérieur 14 et les poutres 10 sont disposés pour constituer un parallélogramme déformable. Le dispositif comporte deux vis micrométriques 18 montées en liaison vis-écrou sur des extrémités supérieures des montants respectifs 6 de sorte que les extrémités libres des vis 18 sont orientées en direction l'une de l'autre et sont adaptées à prendre appui sur des extrémités respectives gauche et droite du bras supérieur 14 en vue de déplacer celui-ci vers la gauche ou vers la droite et ainsi de former le parallélogramme.

Le dispositif comporte une entretoise gauche 20 fixée à une face interne droite de la poutre gauche 10, et une entretoise supérieure et droite 22 fixée à une face interne gauche de la poutre droite 10. Cette entretoise 22 présente un conduit vertical traversant fileté 24 débouchant en regard du support 8, et un conduit horizontal traversant fileté 26 débouchant en regard de l'entretoise gauche 20. Ce conduit 26 est prolongé par un conduit lisse traversant la poutre droite 10. Dans chacun des deux conduits 24, 26 de l'entretoise 22, le dispositif comporte un poussoir respectif 28 à face externe lisse, engagé dans le conduit, et un organe de manoeuvre 30 à face filetée en prise avec le filet du conduit associé. L'organe de manoeuvre 30 du conduit horizontal 26 est également engagé dans le conduit de la poutre droite 10. Dans chaque conduit 24, 26, une bille 31 est intercalée entre le poussoir 28 et l'organe de manoeuvre 30 associés. Une extrémité proximale du poussoir 28 formant siège pour la bille 31 a une forme conique femelle.

Pour mettre en oeuvre le procédé selon l'invention, on dispose en outre de quatre cales 32 en zirconium, chacune en forme de parallélépipède rectangle. On dispose ces quatre cales 32 avec les quatre faces libres 34 des cales 32 en regard les unes des autres, de façon que ces faces forment une enceinte à profil en parallélogramme, c'est-à-dire que l'enceinte est en forme de parallélépipède. La cale inférieure repose sur le support 8, la cale gauche est en appui contre l'entretoise gauche 20, les cales supérieure et droite sont en appui contre une extrémité distale des poussoirs 28 respectifs.

On dispose dans l'enceinte des fibres optiques monomodes 36 munies chacune d'une ferrule en zirconium à son extrémité, en une matrice de forme générale rectangulaire, comportant des lignes et des colonnes formant un angle a avec la direction verticale et un angle b avec les lignes. Les ferrules sont généralement en contact les unes avec les autres. Les quatre faces latérales de la matrice sont en contact avec les quatre faces 34 de l'enceinte.

Pour régler les dimensions de la matrice, on actionne le ou les organes de manoeuvre 30 pour faire avancer le ou les poussoirs 28 en direction de la matrice. La matrice est ainsi comprimée verticalement suivant les colonnes entre la cale supérieure et la cale inférieure, et/ou horizontalement suivant les lignes entre les cales gauche et droite. Le cas échéant, cette compression met en contact les ferrules qui ne l'étaient pas initialement.

A ce stade, l'angle b, indiquant la perpendicularité de la matrice, est généralement très différent de 90°. A l'aide des vis micrométriques 18, on fait tourner les poutres 10 autour de leurs extrémités inférieures 12 vers la gauche ou vers la droite pour modifier l'angle des poutres par rapport au socle 4, les deux poutres 10 continuant à former un parallélogramme. Ce changement de position est répercuté sur la matrice de fibres via les entretoises 20, 22, le poussoir droit 28 et les cales gauche et droite 32. Le changement de position des poutres 10 déforme le profil en parallélogramme de l'enceinte, ce qui fait varier les angles a et b de la matrice. On peut donc régler l'angle b pour approcher le plus possible une valeur de b égale à 90°, comme sur la figure 4.

Lorsque l'angle b de la matrice et ses dimensions ont été convenablement réglés, on injecte une résine de moulage dans l'enceinte et la matrice pour mouler la matrice et immobiliser les ferrules les unes par rapport aux autres.

Les ferrules et les cales sont réalisées en zirconium avec des tolérances de fabrication très faibles mais tout à fait compatibles avec le savoir-faire des industriels. Sur les ferrules, ces tolérances sont de 0,5 µm sur le diamètre extérieur, de 1 µm sur le diamètre intérieur et la concentricité entre les diamètres intérieur et extérieur est inférieure à 1 µm. La planéité des cales 32 est inférieure à 0,1 µm.

Le recours à des poutres 10 reliées au socle 4 par des liaisons flexibles 12 élimine le problème propre au jeu de fonctionnement des pièces mécaniques. Le dispositif procure un réglage de la perpendicularité b avec une définition de 0,1 milliradian.

Une matrice de 8x8 (64 fibres) a été réalisée selon cette procédure. Les résultats correspondent aux prévisions. L'écart moyen par rapport à une grille de référence est de 1,04 µm, l'écart maximum de 2,55 µm, et l'écart type de 0,58 µm. L'expérience acquise lors de la réalisation de cette matrice (ainsi que d'une barrette de seize fibres avec un écart maximum de 1 µm par rapport à la position parfaite) permet d'envisager la réalisation de matrices de plus grandes dimensions.

Ce procédé d'assemblage collectif est simple, ce qui permet d'obtenir un coût de réalisation très bas. Il n'existe pas a priori de limitation du nombre de fibres pour la réalisation de ces matrices.

## Revendications

1. Procédé de fabrication de matrices de fibres optiques (36), **caractérisé en ce qu'**il comprend les étapes consistant à :
- disposer des fibres optiques (36) dans une enceinte en forme de parallélogramme déformable, en une matrice comprenant des lignes et des colonnes formant un angle (b) par rapport aux lignes ; et
- déformer l'enceinte pour faire varier l'angle (b).

2. Procédé de fabrication selon la revendication 1, **caractérisé en ce qu'**il comprend l'étape de fixer les fibres (36) les unes par rapport aux autres.

3. Procédé de fabrication selon la revendication 2, **caractérisé en ce que** l'étape de fixation comprend un moulage au moyen d'une résine.

4. Procédé de fabrication selon l'une quelconque des revendications 1 à 3, **caractérisé en ce qu'**il comprend l'étape de presser la matrice suivant au moins une direction parmi la direction des lignes et la direction des colonnes.

5. Dispositif de fabrication de matrices de fibres optiques, présentant quatre faces (34) délimitant une enceinte adaptée à recevoir des fibres optiques (36) disposées en une matrice, les faces (34) donnant à l'enceinte une forme de parallélogramme, les faces (34) non parallèles entre elles formant un angle (b), **caractérisé en ce que** l'enceinte est déformable pour faire varier l'angle (b).

6. Dispositif selon la revendication 5, **caractérisé en ce qu'**il comporte des moyens (10, 14, 18) de réglage de l'angle (b).

7. Dispositif selon la revendication 5 ou 6, **caractérisé en ce qu'**il comporte deux éléments (32) formant deux faces (34) de l'enceinte parallèles entre elles, un châssis (4), et au moins un actionneur (10) mobile par rapport au châssis et relié aux éléments (32) de sorte qu'un déplacement de l'actionneur (10) fait varier l'angle (b).

8. Dispositif selon la revendication 7, **caractérisé en ce que** l'actionneur (10) est articulé au châssis (4).

9. Dispositif selon la revendication 8, **caractérisé en ce que** l'actionneur (10) est articulé au moyen d'une partie flexible (12).

10. Dispositif selon l'une quelconque des revendications 7 à 9, **caractérisé en ce qu'**il comporte deux actionneurs (10) reliés aux deux éléments respectifs (32) et reliés entre eux.

11. Dispositif selon l'une quelconque des revendications 5 à 10, **caractérisé en ce qu'**il comporte des moyens (28, 30, 31) de réglage d'une distance séparant des faces (34) de l'enceinte parallèles entre elles.

12. Dispositif selon la revendication 11, **caractérisé en ce que** les moyens de réglage de la distance comprennent un organe de manoeuvre (30), un poussoir (28) pour pousser l'une des faces (34) sous l'effet d'une sollicitation par l'organe de manoeuvre, et une bille (31) intercalée entre l'organe de manoeuvre et le poussoir.

13. Dispositif selon l'une quelconque des revendications 5 à 12, **caractérisé en ce qu'**il comporte des éléments (32) en zirconium formant les faces (34).

14. Dispositif selon la revendication 13, **caractérisé en ce que** les éléments (32) comprennent des cales.

15. Matrice de fibres optiques (36), **caractérisée en ce que** la matrice présente un écart de position de chaque coeur de fibre inférieur à 2,5 µm par rapport à une grille de référence.

16. Matrice selon la revendication 15, **caractérisée en ce que** les fibres (36) sont monomodes.

## Patentansprüche

1. Verfahren zum Herstellen von Matrizen aus optischen Fasern (36), **dadurch gekennzeichnet, dass** es die folgenden Schritte aufweist:
- Anordnen von optischen Fasern (36) in einem Rahmen in Form eines deformierbaren Parallelogramms als eine Matrix mit Zeilen und Spalten, welche mit den Zeilen einen Winkel (b) einschließen,
- Deformieren des Rahmens zum Verändern des Winkels (b).

2. Herstellungsverfahren nach Anspruch 1, **dadurch gekennzeichnet, dass** es als Schritt umfasst: Befestigen der Fasern (36) untereinander.

3. Herstellungsverfahren nach Anspruch 2, **dadurch gekennzeichnet, dass** der Befestigungsschritt das Vergießen mit einem Harz umfasst.

4. Herstellungsverfahren nach einem der Ansprüche 1 bis 3, **dadurch gekennzeichnet, dass** es als Schritt umfasst: Pressen der Matrix in Richtung entlang der Zeilen und/oder in Richtung der Spalten.

5. Vorrichtung zum Herstellen von Matrizen aus optischen Fasern mit vier Seiten (34), die einen Rahmen begrenzen, der ausgelegt ist, um optische Fasern (36) aufzunehmen, die in einer Matrix angeordnet sind, wobei der Rahmen durch die Seiten (34) die Form eines Parallelogramms erhält und die Seiten (34), die nicht zueinander parallel sind, einen Winkel (b) einschließen, **dadurch gekennzeichnet, dass** der Rahmen so deformierbar ist, dass sich der Winkel (b) dabei verändert.

6. Vorrichtung nach Anspruch 5, **dadurch gekennzeichnet, dass** sie Einrichtungen (10, 14, 18) zum Einstellen des Winkels (b) aufweist.

7. Vorrichtung nach Anspruch 5 oder 6, **dadurch gekennzeichnet, dass** sie zwei Elemente (32), die zwei Seiten (34) des Rahmens bilden und die zueinander parallel sind, ein Gestell (4) und wenigstens einen Stellantrieb (10), der gegenüber dem Gestell beweglich ist und der mit den Elementen (32) derart verbunden ist, dass sich bei einer Bewegung des Stellantriebs (10) der Winkel (b) ändert, aufweist.

8. Vorrichtung nach Anspruch 7, **dadurch gekennzeichnet, dass** der Stellantrieb (10) gelenkig an dem Gestell (4) befestigt ist.

9. Vorrichtung nach Anspruch 8, **dadurch gekennzeichnet, dass** der Stellantrieb (10) mittels eines flexiblen Teils (12) gelenkig befestigt wird.

10. Vorrichtung nach einem der Ansprüche 7 bis 9, **dadurch gekennzeichnet, dass** sie zwei Stellantriebe (10) aufweist, die sowohl mit den beiden jeweiligen Elementen (32) als auch miteinander verbunden sind.

11. Vorrichtung nach einem der Ansprüche 5 bis 10, **dadurch gekennzeichnet, dass** sie Einrichtungen (28, 30, 31) aufweist zum Einstellen eines Abstandes zwischen den Seiten (34) des Rahmens, die parallel zueinander sind.

12. Vorrichtung nach Anspruch 11, **dadurch gekennzeichnet, dass** die Einrichtungen zum Einstellen des Abstandes eine Betätigungsvorrichtung (30), einen Stößel (28) zum Drücken auf eine der Seiten (34) unter Einwirkung der Betätigungsvorrichtung und eine Kugel (31) zwischen der Betätigungsvorrichtung und dem Stößel umfasst.

13. Vorrichtung nach einem der Ansprüche 5 bis 12, **dadurch gekennzeichnet, dass** sie Elemente (32) aus Zirkon aufweist, die die Seiten (34) bilden.

14. Vorrichtung nach Anspruch 13, **dadurch gekennzeichnet, dass** die Elemente (32) Unterlegklötze umfassen.

15. Matrix aus optischen Fasern (36), **dadurch gekennzeichnet, dass** die Matrix bei jedem Kern einer Faser eine Fehlpositionierung von weniger als 2,5 µm in Bezug auf ein Referenzgitter aufweist.

16. Matrix nach Anspruch 15, **dadurch gekennzeichnet, dass** die Fasern (36) Einzelmoden-Fasern sind.

## Claims

1. A method of manufacturing optical fiber arrays (36), the method being **characterized in that** it comprises the steps consisting in:
· placing optical fibers (36) in an enclosure in the form of a deformable parallelogram, the fibers being in an array of rows and of columns that are at an angle (b) relative to the rows; and
· deforming the enclosure so as to vary the angle (b).

2. A method of manufacture according to claim 1, **characterized in that** it includes the step of fixing the fibers (36) to one another.

3. A manufacturing method according to claim 2, **characterized in that** the fixing step comprises molding by means of a resin.

4. A method of manufacture according to any one of claims 1 to 3, **characterized in that** it includes the step of pressing the array in at least one direction selected from the row direction and the column direction.

5. A device for manufacturing optical fiber arrays, the device having four faces (34) defining an enclosure suitable for receiving optical fibers (36) disposed in an array, the faces (34) giving the enclosure the shape of a parallelogram with non-parallel faces (34) forming an angle (b) between one another, the device being **characterized in that** the enclosure is deformable so as to vary the angle (b).

6. A device according to claim 5, **characterized in that** it includes means (10, 14, 18) for adjusting the angle (b).

7. A device according to claim 5 or 6, **characterized in that** it includes two elements (32) forming two mutually parallel faces (34) of the enclosure, a frame structure (4), and at least one actuator (10) movable relative to the frame structure and connected to the elements (32) so that displacing the actuator (10) causes the angle (b) to vary.

8. A device according to claim 7, **characterized in that** the actuator (10) is hinged to the frame structure (4).

9. A device according to claim 8, **characterized in that** the actuator (10) is hinged by means of a flexible portion (12).

10. A device according to any one of claims 7 to 9, **characterized in that** it has two actuators (10) connected to two respective elements (32) and interconnected to each other.

11. A device according to any one of claims 5 to 10, **characterized in that** it includes adjustment means (28, 30, 31) for adjusting the distance between mutually parallel faces (34) of the enclosure.

12. A device according to claim 11, **characterized in that** the adjustment means comprise a drive member (30), a pusher (29) for pushing one of the faces (34) under the effect of urging from the drive member, and a ball (31) interposed between the drive member and the pusher.

13. A device according to any one of claims 5 to 12, **characterized in that** it includes zirconium elements (32) forming the faces (34).

14. A device according to claim 13, **characterized in that** the elements (32) comprise blocks.

15. An optical fiber array (36), **characterized in that** the array presents a position of each fiber core less than 2.5 µm relative to a reference grid.

16. An array according to claim 15, **characterized in that** the fibers (36) are monomode fibers.
